# EUROPEAN PATENT APPLICATION

(11) **EP 1 335 374 A1**
(43) Date of publication of application: **13.08.2003**
(21) Application number: 02250893.1
(22) Date of filing: 08.02.2002
(51) Int. Cl.: G11B 25/04, G11B 25/10, G11B 33/04, G11B 7/24

(54) **Data carriers and adaptors therefor**

(71) Applicant: Encore Holdings Limited, Nassau (BS)
(72) Inventor: Choi, King Yeung, 14 Wong Chuk Hang Road (HK)
(74) Representative: Leeming, John Gerard

(57) **Abstract**

A smart card (1) comprises a smart chip (2) and an optical, e.g. CD, data portion (3). The card (1) is of a thickness that it can be inserted into a standard smart card reader, and is mounted in an adaptor (7) when the CD portion (3) is to be read in a CD player, the adaptor providing a compensating element (13) so that the laser from the CD player is able to focus on the data track within the CD portion (3) even though the CD portion (3) itself is not of a thickness compliant with CD standards. The invention is also applicable to other optical formats, such as CD-R, CD-Audio, CD-ROM and DVD, as well as to other non-optical data carriers apart from smart chips, e.g. magnetic strips.

## Description

The present invention relates to a data carrier having at least two different data carrier portions, one of which is optically readable, and to an adaptor for use in reading the same. The invention relates particularly, though not exclusively, to data carriers involving "smart cards".

CDs, CD-ROMs, DVDs and the like provide convenient ways of storing large amounts of data, such as audio, video and software, and have proven to be very popular. They are conventionally round in shape, and, in accordance with set standards, are either 120 mm or 80 mm in diameter (the latter being known as "mini CDs" or as "CD singles").

Non-round CDs are also produced. These may for example be for promotional usage, in which the CD may take on an eye-catching form or the form of a product or the like. Information can then be provided on such CDs, e.g. in a multimedia manner, relating to for example a product, company or the like.

Business cards can now also include a CD data portion, e.g. to provide appropriate information on a business through audio, video and/or software stored in the CD portion.

Such non-round CD items can be played in a CD player either by shaping them so that they have portions which can engage with the mounting grooves, wells or slots in the CD player tray, or by mounting them in an adaptor which itself then suitably engages with the tray.

A discussion of such non-round CDs and adaptors is provided in Australian Patent Application No. 72109/01 filed on 13 September 2001 and entitled "An optically readable carrier and an adapter therefor". The contents of this document are incorporated herein by reference.

The above application also describes an optically readable carrier that can be used as a smart card. The data carrier thus has both an optically readable portion, such as a CD or DVD portion, and a smart card chip.

Such a carrier enables a card issuer for example to provide promotional and/or marketing material on the carrier. For example, the issuer may wish to provide an audio or video presentation of a new product or service, and/or may wish to provide software for accessing or providing required information. Although this could theoretically be achieved by providing the data on the smart card chip, it is best achieved, in practice, by an optical recording.

The combination within a single unit of CD or DVD technology with smart card technology is able to reduce costs without compromising the amount of information available. The two technologies are able to compliment one another, as the CD or DVD technology is ideal for recording static information, whilst the smart card technology can handle changing information.

In the above-mentioned Australian Patent Application, the combination optical data carrier and smart card is of a stepped configuration, with the optically readable data part of the card having a thickness dimension of about 1.20 mm and with the smart card part of the card having a thickness dimension of about 0.80 mm. These dimensions accord with current standards for the two technologies.

The present invention provides an alternative form of data carrier and adaptor.

Viewed from one aspect, the present invention provides a data carrier and adaptor therefor, wherein the data carrier includes a first, optically readable, data carrier portion and a second data carrier portion, wherein the data carrier has a maximum thickness that is less than that required by a reader of the first data portion but that allows the carrier to be read by a reader of the second data portion, and wherein the adaptor has a compensating element for enabling an optical reader to read the first data portion when the carrier is mounted on the adaptor.

Thus, a smart card with a CD recorded portion in accordance with the present invention can be sized so as to be received fully within a smart card reader, whilst also being readable by a CD player through the use of the adaptor. The adaptor can suitably mount the card so that the reading laser of the CD player is able to focus on the data track in the CD portion of the carrier.

The invention also of course extends to the data carrier itself and to the adaptor itself.

The invention is in contrast to the solution provided in Australian Patent Application No. 72109/01, discussed above, in which the CD/DVD portion of the carrier is configured for correctly playing in a CD player or the like. In the present invention, the CD (or other optical data format) portion is allowed to be thinner than that required by the optical data player, and this is then accounted for by providing an adaptor with a suitable compensating element for enabling optical playback.

A smart card in accordance with the present invention may thus be sized to be fully inserted into a smart card receiver, e.g. as may be required by automatic teller machines of banks or other financial institutions.

Generally, a CD or DVD player requires a media thickness of between 1.10 and 1.50 mm, and so the invention can also be seen as providing a data carrier of both optically and non-optically readable data, the carrier having a maximum thickness which is less than 1.10 mm, an adaptor being provided to account for the lack of thickness when the carrier is played in an optical data reader.

Also, where the invention is to be used with smart cards and the like, they generally require a thickness of 0.76 ± 0.08 mm in order to be used with standard readers. Accordingly, the invention can further be seen to reside in the provision of a data carrier having both an optically readable data storage portion and a non-optically readable data storage portion, the carrier having a maximum thickness of 0.84 mm, or preferably 0.80 mm, or less, and an adaptor being provided to account for the lack of thickness when the carrier is played in an optical reader.

The data carrier may take any suitable form, and preferably is of uniform thickness. It may for example itself be sized to engage with the locating parts of an optical reader, such as the grooves, wells or slots within the receiving tray of a CD or other optical player. Alternatively, the adaptor may provide this function, as well as providing the compensating element.

In a particularly preferred form, the data carrier is of rectangular shape, and it is especially preferred for the data carrier to have dimensions as defined for a standard smart card (e.g. as defined by the ISO or other standards bodies).

Although the use of the present data carrier with smart card technology is of especial advantage, the invention is also applicable to other forms of data storage. Thicknesses and dimensions would then be determined according to appropriate standards for those data technologies. For example, the present invention may also be applied to the magnetic recordal of data, e.g. on magnetic strips, and, the invention thus provides for the production of an optically and magnetically readable data carrier of reduced thickness. In this case, the card dimensions may for example be set in accordance with appropriate standards for magnetic cards. The magnetic strip would preferably be provided on the opposite side of the carrier from the optically readable side, so as not to interfere with this function.

It would also be possible to combine both smart card and magnetic technology on the same card with an optically readable data portion.

When the data carrier is used as a smart card, the smart card chip may be embedded or otherwise located on the carrier in an appropriate position for reading. This position is set within strict guidelines for smart chips of the contact type (e.g. having gold contacts for engagement with sprung reader contacts), and may require the optical data portion of the carrier to be mounted off-centre, in which case the adaptor may need to compensate for this so that the optical portion is central when mounted in a reader tray.

Positioning is not so crucial for "contactless" smart cards, as these cards use an antenna, and the data is read using an electromagnetic signal that can be effective at a range of for example 5 cm. The chip can therefore be placed anywhere on the carrier so long as it does not interfere with the optical storage portion.

Preferably, when provided as a contactless smart card, the data carrier uses a chip having an integrated antenna or an antenna that is close to the chip, so that the antenna does not interfere with the optical data portion.

The inventive data carrier may be made in any suitable manner, as would be well understood by the skilled man. Thus, the carrier may be made using the standard processes of optical disc fabrication (e.g. for CD, CD-R and/or DVD technology), and the carrier may be moulded, e.g. from polycarbonate material. The skilled man would have no difficulty in embedding conventional elements such as a smart chip or a magnetic strip into these carriers.

Various methods of producing an optical data and smart chip card are also further discussed in Australian Patent Application No. 72109/01 mentioned above, and are incorporated herein by reference.

A difference in the fabrication process would be that the thickness of the optical data portion is made less than that required by the relevant standards. This may be achieved for example by reducing the thickness of the main, e.g. polycarbonate, body of the carrier.

The data may be recorded on the optical data portion in any suitable format, such as in a CD, CD-R, CD-Audio, CD-ROM, or DVD format or any other suitable format, as appropriate, and the card and optical data portion may be fabricated accordingly.

The carrier may be single or double-sided, and may also be single or double-layered, e.g. to take account of double-layered DVD formats.

The adaptor itself and the compensating element may take any suitable form, and the compensating element may form a supplementary lens for e.g. the laser beam of the optical player.

Preferably, the compensating element comprises a portion of the adaptor which is of a thickness such that when the data carrier is mounted thereover, the combined thickness of the optical portion of the data carrier and the compensating element falls within the thickness range required by the appropriate optical reader, e.g. so that when mounted in the receiving tray of an optical reader the data track of the optical portion of the carrier lies in the same plane as that onto which a reading laser beam is designed to focus.

Preferably, the compensating element has a thickness of between about 0.82 and about 0.26 mm (corresponding to the differences between maximum and minimum CD and Smart Card thicknesses). The compensating element preferably has a thickness of between about 0.4 and about 0.5 mm.

The material from which the compensating element is made is preferably of the same refractive index as that of the surface part of the optical portion of the carrier, e.g. a refractive index of 1.55, (so as not to affect the expected focus point of the laser beam). The compensating element is thus preferably made from the same material as the outer layer of the optical data portion of the carrier, e.g. polycarbonate material. An added advantage of making the carrier and adaptor of the same material is that the two are then able to make good contact between one another.

The adaptor itself is preferably also made of the same material, e.g. polycarbonate.

Whilst the making of the compensating element and preferably also the whole of the adaptor from polycarbonate is preferred, it would also be possible to make the element from a different material having a different refractive index. This may then entail altering the thickness of the compensating element appropriately so as to take account of the different refractive index, and so as to ensure proper focussing of the reading beam of the optical player onto the carrier's data track.

Although not necessary, it may also be useful to surface treat the optical data portion of the carrier and/or the compensating element so as to ensure a good coupling of the laser beam through them, and/or to prevent reflections, interference and the like.

The adaptor may have any suitable shape, and need only extend over the actual area of the optical portion of the carrier if desired, for example if the carrier itself were configured to engage with the receiving tray of the optical reader. Preferably, however, the adaptor is configured to do this, and may take any suitable shape to achieve this, including for example the shape of the prior art non-round CDs and/or their adaptors and the inventive CDs and adaptors, as discussed in AU 72109/01 mentioned above.

In an especially preferred embodiment, the adaptor is of circular shape, and has a diameter suitable for the appropriate optical reader, e.g. either 120 mm or 80 mm for a CD or DVD player.

The adaptor and data carrier may engage one another in any suitable manner, and, in one possible form, the data carrier may merely sit on the adaptor, the optical reader in use clamping the carrier and adaptor together. In this case, the adaptor may take a planar form, e.g. the form of a flat disc. It may also, however, include locating elements for initial positioning of the data carrier on the adaptor.

In another form, the adaptor may comprise a recess for receiving the data carrier, the compensating element being provided at the base of this recess. The data carrier may extend out of the recess, and need not be flush to the adaptor level.

As mentioned, the optical portion of the data carrier may be off-centre from the carrier itself, e.g. in order to accommodate a contact-type smart chip in the required position from the carrier edges. In such situations, when optically read, the data carrier will be off-centre from the optical player's spindle, as the spindle will extend through the centre of the optical data portion. The adaptor therefor may be configured to position the off-centre optical portion of the carrier correctly in the centre of the optical player's tray, and to stabilize the carrier when rotating during play. The adaptor may for example have an off-centre well or other locating formation to compensate for the off-centre position of the optical portion of the data carrier.

The adaptor may also be configured to take account of the off-centre mounting of the carrier therein, e.g. by being appropriately counter-weighted so as to ensure stable rotation of the carrier/adaptor assembly during use. This may for example take the form of holes in the adaptor or other appropriate weight distribution e.g. through a change in thickness of the adaptor.

Where the adaptor is made of the same material as the data carrier, it has been found that counter-weighting is not necessary, as the only non-symmetric aspect is the position of the smart card chip, which is not significant.

The adaptor may be one-piece moulded, or may comprise two moulded portions fixed together, one piece having an opening therein for receiving the data carrier and the other piece comprising a flat base portion (sized to provide the required compensation thickness for the data carrier).

The data carrier and adaptor may also include other suitable features from the above-mentioned Australian Patent Application No. 72109/01, such as the use of resilient retaining means for holding the carrier in place on the adaptor or the use of a cross-shaped well for receiving either of two carriers of different dimensions, and the description of these features are also incorporated herein by reference.

Embodiments of the present invention will now be described, by way of example only, with reference to the accompanying drawings. It is to be understood that the particularity of the drawings does not supersede the generality of the preceding description of the invention.

In the drawings:
Figure 1 is a top view of a smart card in accordance with one embodiment of the present invention;
Figure 2 is a side elevation of the card of Fig. 1;
Figure 3 is a schematic diagram showing why an optical reader would fail to read the card of Fig. 1 without an adaptor;
Figure 4 is a schematic diagram showing the reading of a card using an adaptor in accordance with the present invention;
Figure 5 is top view of a smart card and adaptor assembly in accordance with a first embodiment of the adaptor;
Figure 6 is an edge view of the assembly of Fig. 5;
Figure 7 is an enlargement of the area "A" of Fig. 6;
Figure 8 is top view of a smart card and adaptor assembly in accordance with a second embodiment of the adaptor;
Figure 9 is an edge view of the assembly of Fig. 8;
Figure 10 is an enlargement of the area "A" of Fig. 9;
Figure 11 is top view of a smart card and adaptor assembly in accordance with a third embodiment of the adaptor;
Figure 12 is an edge view of the assembly of Fig. 11; and
Figure 13 is an enlargement of the area "A" of Fig. 12.

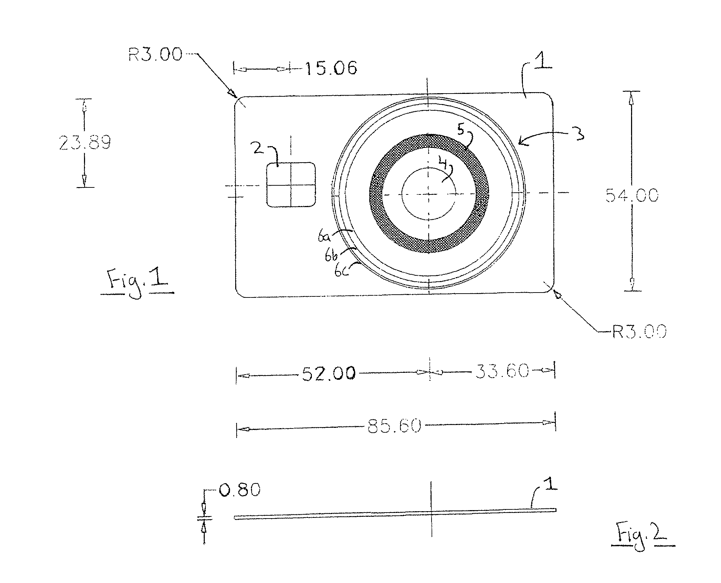

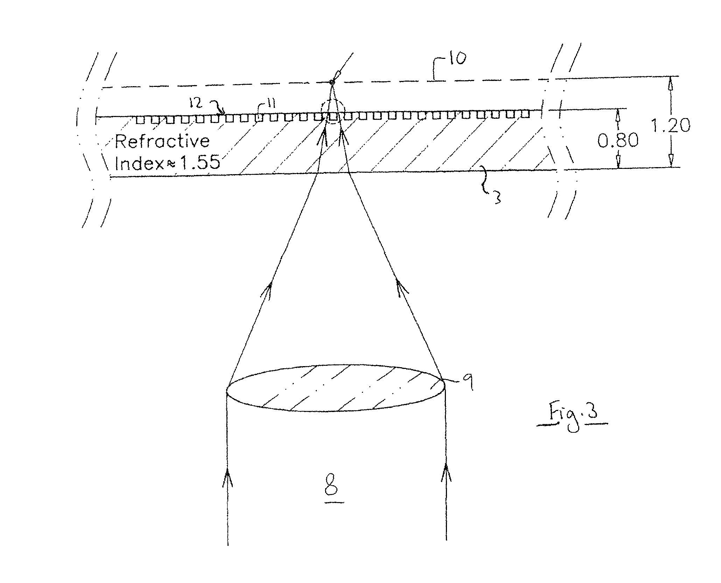

Referring to Figs. 1 and 2, a smart card 1 in accordance with the present invention includes a smart card chip 2 for recording data in electronic form, and a CD portion 3 for storing data to be read optically in e.g. a CD player.

The card 1 and the embedded or imprinted chip 2 are dimensioned and positioned so as to conform to the appropriate standards, so that the card 1 may be read by a standard smart card reader. For example, the appropriate standards for a contact-type smart card are ISO/IEC 7816 for the positioning of the chip 2, and ISO/IEC 7810 for the thickness of the card (which should be 0.76 ± 0.08 mm).

Thus, in this embodiment, the card 1 has a uniform thickness of 0.80 mm, and the other dimensions are as shown in Fig. 1.

The CD portion 3 is positioned so as to allow for the correct positioning of the contact-type smart chip 2 with respect to the card edges. It takes the general form and construction of a standard CD, and accords with usual CD standards, except for its thickness, which is discussed more fully below.

Thus, the CD portion 3 has a central hole 4 of 15 mm diameter for receiving a spindle during play, a clamping area 5 for clamping the card 1 in position during play, a lead in and table of contents (TOC) area 6a, a program area 6b, and a lead out area 6c.

As is standard, the CD portion will generally comprise an injection-moulded piece of clear polycarbonate plastic that is impressed during manufacture with microscopic pits/lands arranged as a single continuous spiral track of data circling from the inside of the disc portion 3 to the outside. A thin reflective layer of aluminium is then sputtered onto the disc and a thin acrylic layer is spin coated over the aluminium to protect it. The remainder of the card, e.g. for mounting the smart card chip 2, may be made from the same polycarbonate material during the same moulding process.

Generally the thickness of a CD is 1.20 mm (+0.3/ -0.1 mm). However, in the present card 1, the CD portion 3 is the same thickness as the rest of the card, i.e. 0.80 mm. This is achieved by a reduction in the depth of the polycarbonate plastic from the depth that would otherwise be standard.

By deviating from the CD standard for thickness, the card 1 is able to be fully inserted into a standard smart card reader, so that the user can take full advantage of the smart card 1, and can for example use the card 1 in the automatic teller machines of banks and other financial institutions.

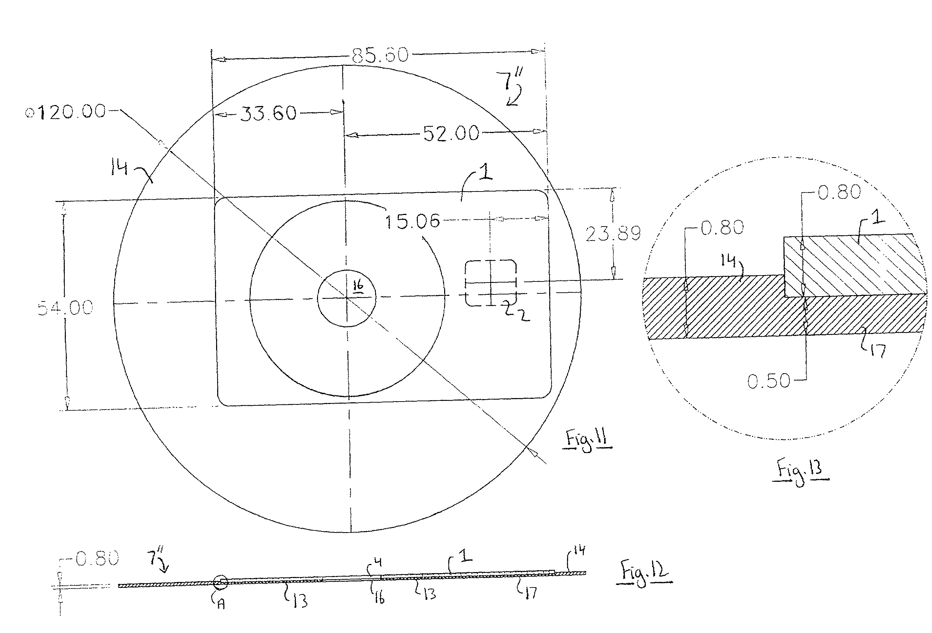

The present invention also provides an adaptor 7 (see e.g. Fig. 5) so that the CD portion 3 of the card 1 may be read by a CD player.

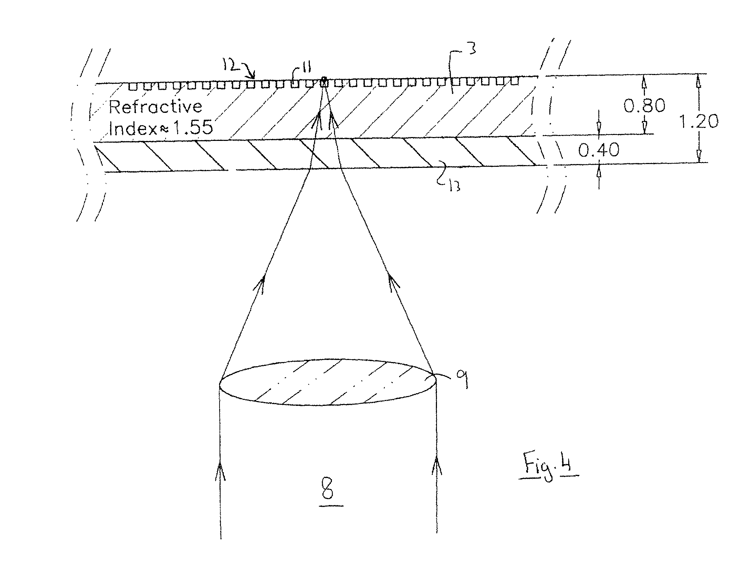

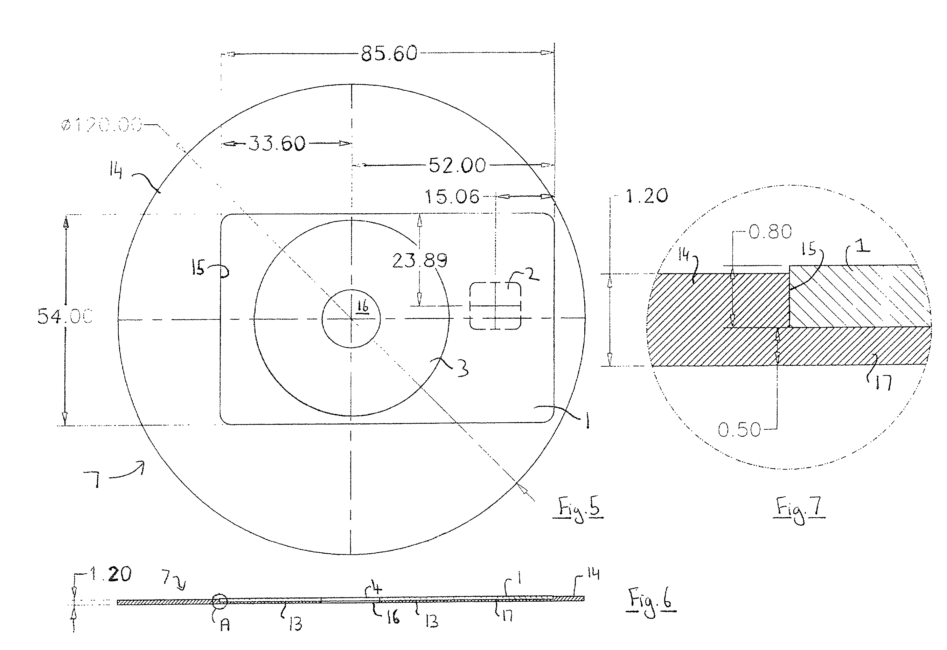

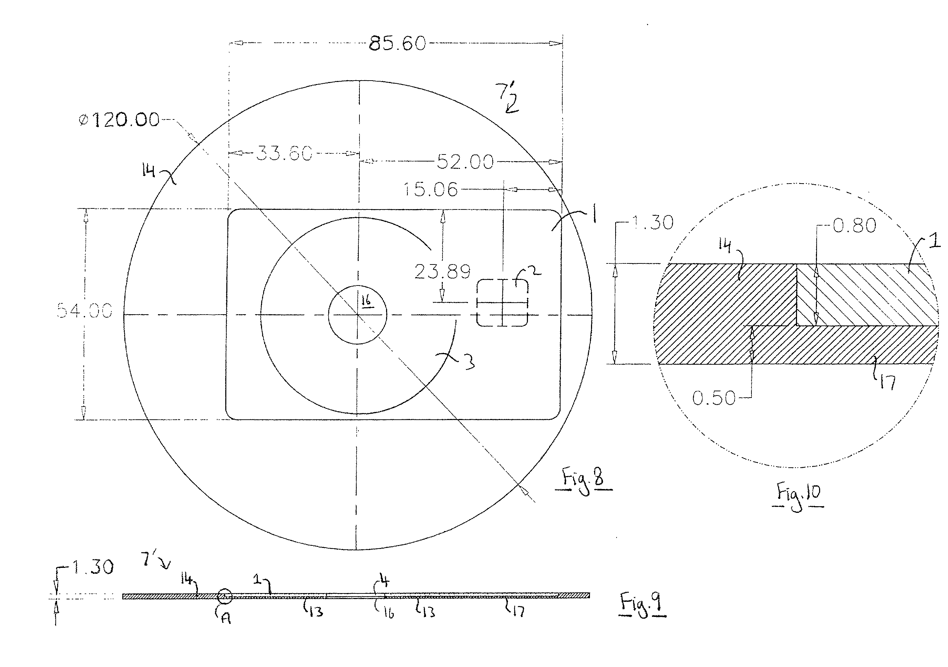

The need for the adaptor is schematically shown in Figs. 3 and 4. Thus, in Fig. 3, the laser beam 8 of a CD player is focussed by a lens 9 so that it will normally scan a plane 10 when a standard CD of thickness 1.20 mm is played. In the present case, however, the CD portion 3 has a thickness of only 0.80 mm, and so the laser beam 8 would fail to focus accurately on the pits/lands 11 of the data track 12. A CD player could not therefore read the data held in the CD portion 3 of the data carrier 1 if inserted by itself into the player.

In accordance with the present invention, however, as shown in Fig. 4, the CD portion 3 has a compensating element 13 placed over it (the compensating element 13 may form all or part of the card adaptor). This compensating element 13 is of the same refractive index as the body of the CD portion 3, e.g. is made from polycarbonate, and is of a suitable thickness, e.g. 0.40 mm, such that the laser beam 8 correctly focuses on the pits/lands 11 in the data track 12. It may be considered as a lens element.

One embodiment of an adaptor with a card 1 mounted therein, is shown in Figs. 5-7.

The adaptor 7 comprises a moulded polycarbonate disc 14 with a rectangular recess 15 therein for receiving the card 1, and a central hole 16 for receiving a CD player spindle.

The adaptor 7 serves the dual purpose of locating the card 1 correctly in the CD receiving tray of a CD player and of providing the compensation element 13 for allowing the CD player's laser to correctly focus on the data in the CD portion 3 of the card 1.

Thus, the adaptor 7 has a diameter of 120.00 mm to accord with usual CD standards. It also has a thickness of 1.20 mm and a recessed portion 15 with a depth of 0.70 mm thereby leaving a base 17 of the recess 15 with a thickness of 0.50 mm, so that the portion of the base 17 that opposes the CD portion 3 of the card 1 can act as the compensating element 13 in the manner shown in Fig. 4. Thus, the portion of the card and adaptor assembly that is read by a CD player will have a combined thickness of 1.30 mm, which is within the thickness range required by the CD standards.

A point to note is that the CD portion 3 is not centred on the card 1 (in order to accommodate the chip 2 in the correct position with regard to the card edges), and so the well 15 of the adaptor 7 is itself off-centre, so as to centrally locate the CD portion 3 in the CD player tray. As both the card 1 and adaptor 2 are made of the same material, polycarbonate, the resulting assembly is still well-balanced (the off-centre position of the smart chip 2 is not significant), and so counter-balancing measures are generally not required to stabilize the assembly during playback of the card 1. If needed, however, suitable counter-balancing formations could be provided on the adaptors, e.g. in the form of suitably located holes or thicker/thinner areas of the adaptor.

Further adaptor embodiments are shown in Figs. 8-10 and Figs. 11-13.

The adaptor 7' of Figs. 8-10 is the same as that shown in Fig. 5, but has a thickness of 1.30 mm, so that the card 1 lies flush within the adaptor disc 14.

The adaptor 7" of Figs. 11-13 is the same as that shown in Fig. 7, i.e. it has a base thickness (and so compensating element thickness) of 0.50 mm, but in this case, the disc 14 has a thickness of only 0.80 mm.

In the Figs. 5 and11 embodiments, the card 1 can be seen to project out from the recess 15 above the surface of the disc 14. There is no problem with this projection, so long as the portion of the overall assembly of disc 14 and card 1 that is read is within the standard CD thicknesses, i.e. the combined thickness of the CD portion 3 together with the compensating element 13 is within standard CD thicknesses. Thus, in these embodiments, the assembly can be suitably clamped and read in a CD player due to the correct assembly thickness in the region of the CD portion 3 of the card 1, whilst the outer dimensions of the disk 14 ensure that the card 1 is accurately located within the CD tray during rotation.

Indeed, the adaptor need have no recess 15, and, instead, the card 1 may merely sit on top of a flat adaptor, which would then have a uniform thickness of about 0.50 mm (to provide the appropriate compensating element 13). The card and adaptor would then be clamped together on insertion into a CD player. For ease of use, such an adaptor may still have projections or other elements for locating the card 1 in place on the adaptor 7, so that the spindle holes 4 and 16 are aligned when the assembly is placed into a CD tray.

The invention is not only applicable to CD formats, but may also be used with CD-R, CD-Audio, CD-ROM, DVD and any other suitable optical data carrier formats.

The present invention (i.e. a data carrier that can be read by optical and e.g. non-optical data readers through a reduction in thickness of the optical portion of the card from acceptable standards and through the use of a compensating adaptor) need not only apply to smart cards, but has applications in relation to any other suitable data storage, such as for example magnetic data storage, e.g. on magnetic strips, such as are used for credit and debit cards and the like. In such cases, other suitable standards may be applicable with other suitable measurements. Also, in the case of a magnetic strip, the strip is preferably mounted on the opposite side of the carrier from the side through which the CD portion is read, so that there is more freedom as to where to place the strip without interfering with the reading of the CD portion.

Further, the required dimensional constraints illustrated relate to CD formats, and it will be appreciated that these constraints may vary depending on the formats used and on the standards applicable, which themselves may vary over time.

It is to be understood that various alterations, additions and/or modifications may be made to the parts previously described without departing from the ambit of the present invention.

As an example, it would be possible to use a compensating element not made from polycarbonate, and having a different refractive index from that of e.g. the CD data portion 3. In this case, the thickness of the compensating element may need to be altered to account for this different refractive index. The CD data portion and/or the compensating element could also be surface treated to facilitate coupling of the laser beam 8 therethrough, and/or to inhibit reflections, interference effects and the like.

## Claims

1. A data carrier and adaptor therefor, wherein the data carrier includes a first, optically readable, data portion and a second data portion, wherein the data carrier has a maximum thickness that is less than that required by a reader of the first data portion but that allows the carrier to be read by a reader of the second data portion, and wherein the adaptor has a compensating element for enabling an optical reader to read the first data portion when the carrier is mounted on the adaptor.

2. The carrier and adaptor of claim 1, wherein the data carrier has a maximum thickness of less than 1.10 mm.

3. The carrier and adaptor of claim 1, wherein the carrier has a maximum thickness of 0.84 mm.

4. The carrier and adaptor of claim 1, wherein the carrier has a maximum thickness of 0.80 mm.

5. The carrier and adaptor of claim 1, wherein the second data portion includes a smart chip.

6. The carrier and adaptor of claim 1, wherein the second data portion is a magnetic strip.

7. The carrier and adaptor of any preceding claim, wherein the compensation element is between about 0.26 and about 0.82 mm in thickness.

8. The carrier and adaptor of any preceding claim, wherein the compensation element is between 0.40 and 0.50 mm in thickness.

9. The carrier and adaptor of any preceding claim, wherein the compensation element comprises polycarbonate.

10. The carrier and adaptor of any preceding claim, wherein the adaptor is configured to locate the data carrier within a carrier tray of an optical reader.

11. The carrier and adaptor of any preceding claim, wherein the adaptor is disc-shaped.

12. The carrier and adaptor of any preceding claim, wherein the adaptor has a recess therein for receiving the data carrier.

13. The carrier and adaptor of any preceding claim, wherein the adaptor is composed of the same material as the first data portion.

14. The carrier and adaptor of any preceding claim, wherein the adaptor is composed of polycarbonate.

15. The carrier and adaptor of any preceding claim, wherein the first data portion is a CD, CD-R, CD-Audio, CD-ROM or DVD data portion.

16. A data carrier of both optically and non-optically readable data, the carrier having a maximum thickness which is less than 1.10 mm.

17. A data carrier having a first optically readable data storage portion and a second data storage portion, the carrier having a maximum thickness of 0.84 mm.

18. The data carrier of claim 17, having a maximum thickness of 0.80 mm.

19. An adaptor configured for engagement with a data carrier that has an optically readable data portion thereon of a thickness less than that required by an optical reader, the adaptor including a compensating element that cooperates with the data portion to allow an optical reader to focus on the data within the optically readable data portion of the data carrier.

20. A data carrier and adaptor assembly, wherein the data carrier includes a first, optically readable, data portion and a second data portion, wherein the first data portion has a thickness less than that required by an optical reader of the first data portion, and wherein the adaptor has a compensating element for enabling an optical reader to read the first data portion.

21. A data carrier wherein the data carrier includes a first, optically readable, data portion and a second data portion, wherein the first data portion has a thickness less than that required by an optical reader of the first data portion.
